# EUROPÄISCHE PATENTSCHRIFT

(11) **EP 0 607 157 B1**
(45) Veröffentlichungstag und Bekanntmachung des Hinweises auf die Patenterteilung: **11.11.1998**
(21) Anmeldenummer: 92917018.1
(22) Anmeldetag: 07.08.1992
(51) Int. Cl.: B60L 15/00, B60V 3/04

(54) **SPURGEFÜHRTES TRANSPORTFAHRZEUG**
TRACK-GUIDED TRANSPORT VEHICLE
VEHICULE GUIDE DE TRANSPORT

(30) Priorität: 09.08.1991 DE 4126453
(43) Veröffentlichungstag der Anmeldung: 27.07.1994
(73) Patentinhaber: GRÜNDL UND HOFFMANN GESELLSCHAFT FÜR ELEKTROTECHNISCHE ENTWICKLUNGEN MBH, 82319 Starnberg (DE); RICHERT, Withold, D-41836 Hückelhoven (DE)
(72) Erfinder: RICHERT, Withold, D-5142 Hückelhoven (DE); GRÜNDL, Andreas, D-8000 München 70 (DE); HOFFMANN, Bernhard, D-8130 Starnberg (DE)
(74) Vertreter: Klunker . Schmitt-Nilson . Hirsch
(86) Internationale Anmeldenummer: EP9201805
(87) Internationale Veröffentlichungsnummer: WO9302889

(56) Entgegenhaltungen:
- DE-A- 2 423 579
- DE-A- 2 455 911
- US-A- 3 623 433
- REVUE GENERALE DE L'ELECTRICITE Bd. 84, Nr. 2, Februar 1975, PARIS FR Seiten 112 - 120 A.WIART 'PROPULSION ELECTRIQUE A GRANDE VITESSE' s
- IEEE TRANSACTIONS ON MAGNETICS Bd. 28, Nr. 1, Januar 1992, NEW YORK US Seiten 474 -477 ,XP000258042 M. SHIBATA ET AL.'On- Board Power Supply System of a Magnetically Levitated Vehicle'

## Beschreibung

Die Erfindung betrifft ein spurgeführtes Transportfahrzeug, mit einem elektrischen Synchron-Linearantrieb, einer Luftkissenanordnung zur Lastaufnahme, und einer angetriebenen Kompressoreinheit zur Drucklufterzeugung, wobei der Synchron-Linearantrieb mindestens einen an der Fahrstrecke angeordneten Langstator mit Statorwicklungen zum Erzeugen eines Wanderfeldes für den Antrieb des Fahrzeugs und mindestens einen am Fahrzeug vorhandenen Erregerteil mit gleichstromgespeister Erregerwicklung aufweist, wobei zur Bordstromversorgung elektrische Energie induktiv über die Statorwicklungen auf das Fahrzeug übertragen wird.

Ein derartiges Transportfahrzeug ist aus dem Dokument DE-A-24 23 579 bekannt. Es ist beschrieben, daß man die Reisegeschwindigkeit des Transportfahrzeugs etwas kleiner als die Ausbreitungsgeschwindigkeit des Wellenfeldes im Stator wählen kann, wodurch am Erregerteil Spannung induziert wird und elektrische Energie für die Bordversorgung zur Verfügung steht. In dem Dokument ist nicht offenbart, wo die Kompressoreinheit angeordnet ist und wie sie angetrieben wird.

Der Erfindung liegt die Aufgabe zugrunde, ein speziell zum Transport schwerer Lasten ausgebildetes, spurgeführtes Transportfahrzeug mit Luftkissentragung anzugeben, welches auch lange Wege zurückzulegen vermag, also nicht über Druckluft-Schlauchverbindungen oder Stromkabel mit der Umgebung verbunden ist.

Das Transportfahrzeug ist erfindungsgemäß gekennzeichnet durch Mittel, mit denen dem in die Statorwicklungen eingespeisten, zur Vortriebskrafrerzeugung dienenden Wechselstrom ein höherfrequenter Wechselstrom überlagert wird, und durch eine am Erregerteil vorgesehene Einrichtung zum Auskoppeln der von dem höherfrequenten Wechselstrom in der Erregerwicklung induzierten Energie zum Speisen der elektrisch angetriebenen Kompressoreinheit.

Aus dem Dokument US-A-3 ,623,433 ist ein Transportfahrzeug bekannt, das mittels eines linearen Induktionsmotors angetrieben wird und durch Luftkissen schwebend gehalten und geführt wird. Kompressoreinheiten zur Drucklufterzeugung werden elektrisch angetrieben, und der hierfür erforderliche Strom wird über Schleifkontakte in das Fahrzeug gebracht.

Bei dem erfindungsgemäßen Transportfahrzeug kann es sich um ein fahrerloses Transportfahrzeug für schwere Lasten handeln. Bei der Erfindung geht es speziell um Fahrzeuge, die Lasten von mehr als 1000 kg zu transportieren vermögen. Vorzugsweise ist der Langstator in einzelne Statorabschnitte unterteilt. Dem niederfrequenten Wechselstrom, der zur Erzeugung eines Wanderfelds am Stator dient, wird ein höherfrequenter Wechselstrom überlagert, dessen Frequenz z. B. um das 10-fache höher als die niedrige Frequenz für das Wanderfeld ist.

Während der niederfrequente Wechselstrom in der Erregerwicklung keine Spannung induziert, wird durch den höherfrequenten Wechselstrom in der Erregerwicklung eine Spannung induziert, die am Fahrzeug ausgekoppelt wird und als Energie zum Speisen der Kompressoreinheit zur Verfügung steht. Auch die zur Gleichstromspeisung des Erregerteils erforderliche Energie wird in der genannten Weise auf das Fahrzeug übertragen. Damit ist insgesamt eine berührungslose Energieübertragung möglich.

Die Erfindung macht also Gebrauch von dem an sich bekannten Prinzip, große Lasten mittels Luftkissen abzustützen und dadurch eine reibungsarme Führung des Fahrzeugs zu ermöglichen. Außerdem macht die Erfindung Gebrauch von einem Synchron-Linearantrieb, der in spezieller Weise kombiniert ist mit einer induktiven Energieübertragung über die Teile des Linearantriebs. Die beiden Wicklungen an der Strecke bzw. an dem Fahrzeug kann man als die beiden Wicklungen eines aufgeschnittenen Transformators bezeichnen. Um die unvermeidlichen Verluste am Luftspalt zwischen der Wicklung am Fahrzeug und Wicklung an der Strecke zu minimieren, kann die Wicklung am Fahrzeug beweglich gelagert sein, während zur Abstandshaltung gegenüber der Wicklung an der Strecke ein Distanzrad, ein Distanz-Luftkissen, eine positionsregelnde Servohydraulik mit entsprechenden Weggebern oder eine elektromagnetische Anordnung (wie bei der Schweberegelung) vorgesehen ist.

Während bei einem üblichen Linearmotor das Fahrzeug durch magnetische Anziehung und Abstoßung getragen wird, was bei hohen Lasten einen erheblichen Energieaufwand erforderlich macht, wird bei dem erfindungsgemäßen Transportfahrzeug das Eigengewicht des Fahrzeugs sowie die Last durch das Luftkissen aufgenommen. Für die Tragkraft muß also keine zusätzliche elektrische Energie in die am Fahrzeug befindlichen Erregerwicklung bereitgestellt werden. Die Gleichstromspeisung der Erregerwicklung geschieht zum Zweck der Erzeugung eines Magnetfelds, welches mit dem Wanderfeld des Langstators zusammenwirkt, um das Fahrzeug vorzutreiben.

Am Fahrzeug kann die induktiv in die Wicklung am Fahrzeug eingekoppelte Energie in Form des hochfrequenten Wechselstroms mittels passivem oder aktivem Gleichrichter gleichgerichtet und ausgekoppelt werden, so daß die Energie zum Antreiben der Kompressoreinheit und zur Gleichstromeinspeisung in die Erregerwicklung am Fahrzeug zur Verfügung steht,

Zur Gleichrichtung wird ein sogenannter aktiver Gleichrichter mit Pulsstromrichter bevorzugt. Dieser Pulsstromrichter übernimmt dann nicht nur die Gleichrichtung des hochfrequenten Wechselstroms in der Erregerwicklung am Fahrzeug, sondern übernimmt darüber hinaus auch die Einstellung des Gleichstroms in der Erregerwicklung.

Die Erfindug schafft außerdem eine Anordnung für Kurvenfahrten und Weichenfahrten. Im Bereich einer Weiche sind zwei Statorabschnitte in gewissem Abstand parallel zueinander angeordnet, und am Fahrzeug befindet sich ein zusätzliches Erregerteil. Damit das (Haupt-)Erregerteil am Fahrzeug auf die durch den weiteren Stator im Boden gebildete Spur überwechselt, befindet sich im Weichenbereich ein zum Hauptstator schräg angeordneter Hilfsstator, der mit dem zusätzlichen Erregerteil am Fahrzeug zusammenwirkt, Für den "Spurwechsel" wird das zusätzliche Erregerteil am Fahrzeug sowie der schräg angeordnete Hilfsstator kurzzeitig eingeschaltet, so daß das Fahrzeug eine seitliche Antriebskomponente erfährt.

Befindet sich dann das (Haupt-)Erregerteil des Fahrzeugs über dem neuen, abzweigenden Langstator, so werden das zusätzliche Erregerteil und der Hilfsstator im Boden wieder ausgeschaltet, und das (Haupt-)Erregerteil am Fahrzeug wird wieder eingeschaltet, um in Verbindung mit dem Langstator für den Antrieb des Fahrzeugs zu sorgen.

Weiterhin kann der "Spurwechsel" auch dadurch bewirkt werden, daß zwei Langstatorabschnitte parallel zueinander mit einem ersten Abstand angeordnet sind, und daß an dem Fahrzeug ein Zusatz-Erregerteil angeordnet ist, dessen Abstand vom (Haupt-)Erregerteil ein anderer als der Abstand zwischen den Langstatorabschnitten ist.

Beispielsweise kann der Abstand zwischen den beiden Erregerteilen am Fahrzeug kleiner sein als der Abstand zwischen den Langstatorabschnitten. Für einen Spurwechsel wird dann das (Haupt-)Erregerteil sowie der bislang gespeiste Langstatorabschnitt abgeschaltet, und das Zusatz-Erregerteil und der andere, parallele Langstator werden angeschaltet. Dadurch erfährt das Fahrzeug eine Querkraft, mit der Folge, daß das Zusatz-Erregerteil mit dem anderen Langstator ausgerichtet wird. Im Anschlug an diese Querbewegung kann man dann wieder am Fahrzeug auf das (Haupt-)Erregerteil zurückschalten, so daß dieses (Haupt-)Erregerteil von dem "neuen" Langstator angezogen wird.

Durch die oben beschriebenen Maßnahmen kann man eine Verzweigung im Fahrweg erreichen. Abzweigungen lassen sich ebenfalls realisieren. Während eine Abzweigung nach links oder nach rechts in der oben erläuterten Weise realisiert wird, wird für die Geradeausfahrt ein Überbrückungs-Stator vorgesehen, der eine relativ kurze Länge hat

Im folgenden werden Ausführungsbeispiele der Erfindung anhand der Zeichnung näher erläutert. Es zeigen:
- Figur 1A: eine perspektivische Darstellung eines Transportfahrzeugs mit Luftkissen und mit Synchron-Linearantrieb
- Figur 1B: eine Teilansicht eines Fahrzeugs ähnlich dem Fahrzeug nach Figur 1A, wobei jedoch gemäß Figur 1B zur Abstützung kleine Luftkissen vorgesehen sind
- Figur 1C: eine ähnliche Darstellung wie Figur 1B, wobei die dort dargestellten Stütz-Luftkissen in ihrer Funktion durch einen Hydraulikzylinder und eine Servohydraulik ersetzt sind
- Figur 2: den Stromverlauf in der Statorwicklung und in der Erregerwicklung eines zum Antreiben des Transportfahrzeugs verwendeten Synchron-Linearantriebs
- Figur 3: eine schematische, perspektivische Darstellung eines Teils des an der Strecke des Transportfahrzeugs befindlichen Stators und des über diesem Teil des Stators befindlichen Erregerteils am Transportfahrzeug, und
- Figur 4: eine schematische Darstellung eines Synchron-Linearantriebs mit induktiver Energieübertragung vom Stator S auf das den Erregerteil E tragende Fahrzeug
- Figur 5: eine schematische Skizze zum Veranschaulichen eines "Spurwechsels" eines Fahrzeugs des in Figur 1 dargestellten Typs, und
- Figur 6: eine alternative Ausführungsform einer Weiche für einen "Spurwechsel"

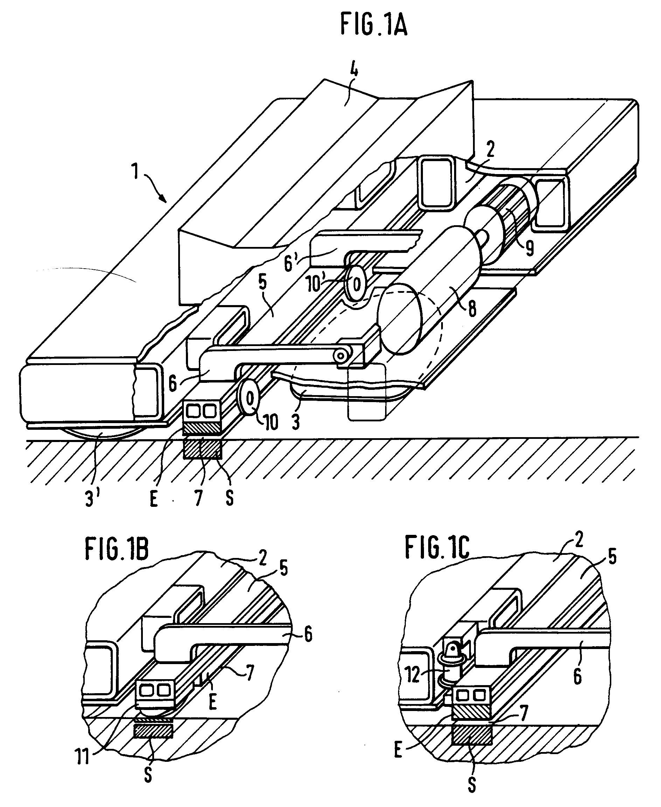

Figur 1A zeigt in perspektivischer Darstellung ein Transportfahrzeug 1 mit Luftkissen. Es ist aus einer Tragkonstruktion 2, Lastluftkissen 3 und 3' und einer Lastaufnahme 4 (hier als Prisma ausgebildet) aufgebaut.

Ein Langstator S ist im Boden in der Weise eingelassen, daß die Oberfläche des Langstators und die Oberfläche des Bodens in einer Ebene liegen.

Die Über Hebel 6 und 6' und über eine Traverse 5 an der Tragkonstruktion 2 beweglich angebrachte Erregerwicklung E ist oberhalb des Langstators S angeordnet und wird durch die magnetischen Kräfte des Linearmotors spurgeführt. Eine weitere Spurführung, z.B. mechanisch, ist dadurch nicht mehr erforderlich.

Um den Luftspalt 7 zwischen dem Langstator S und der Erregerwicklung E möglichst klein und möglichst konstant zu halten, wird die Traverse 5 der Erregerwicklung E durch Distanzräder 10 und 10' abgestützt.

Eine weitere Möglichkeit, den Luftspalt 7 zwischen dem Langstator S und der Erregerwicklung E möglichst klein und möglichst konstant zu halten, besteht nach Figur 1B darin, daS unterhalb der Traverse 5 der Erregerwicklung E kleine Stützluftkissen 11 angeordnet werden.

Nach Figur 1C kann der Luftspalt 7 zwischen dem Langstator S und der Erregerwicklung E aber auch durch Hydraulikzylinder 12 und eine Servohydraulik (hier nicht dargestellt) positionsgeregelt werden.

Zur Speisung der Lastluftkissen 3 und 3' und der kleinen Stützluftkissen 11 mit Druckluft ist innerhalb der Tragkonstruktion 2 eine Kompressoreinheit 8 mit Elektromotor 9 angeordnet. Der Elektromotor 9 wird von dem Erregerteil E gespeist. Die in der Kompressoreinheit 8 erzeugte Druckluft wird über Verbindungsrohrleitungen (hier nicht dargestellt) den Luftkissen 3 und 3' zugeleitet. Diese werden aufgeblasen, heben das Transportfahrzeug mit der Last an und tragen Fahrzeug und Last.

Mit dem Wanderfeld des Linearmotors wird das Fahrzeug mit der Last entlang des Langstators S bewegt.

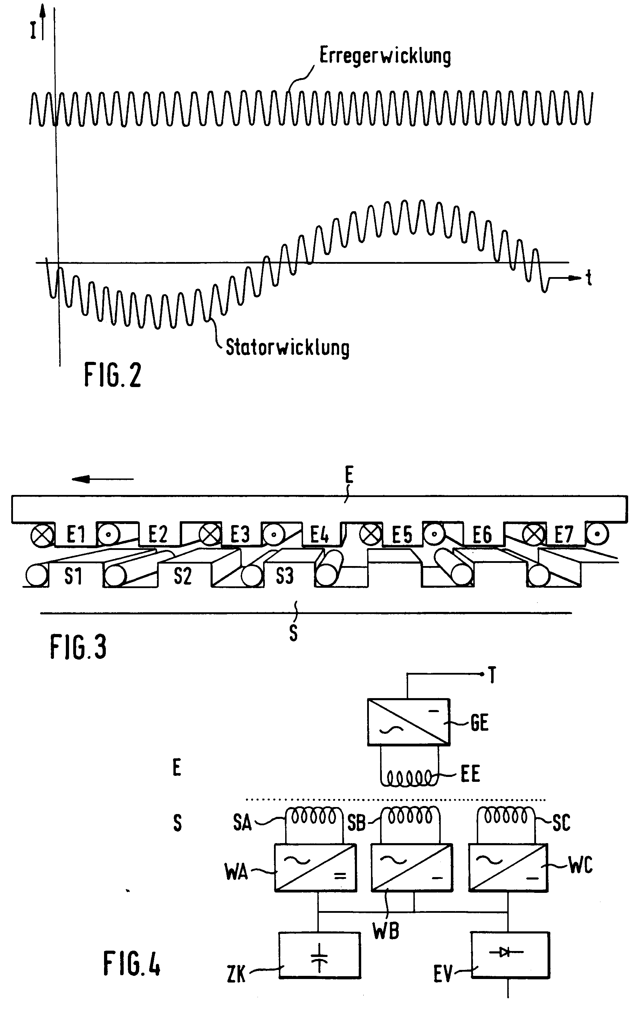

Im folgenden wird anhand der Figuren 2 bis 4 der zum Bewegen des in Figur 1 dargestellten Transportfahrzeugs verwendete Synchron-Linearantrieb näher erläutert, wobei die im Fahrzeug bzw. im bewegten Teil ausgekoppelte Energie zur Speisung des Elektromotors 9 der Kompressoreinheit 8 verwendet wird.

Figur 4 zeigt schematisch die Anordnung eines Synchron-Linearantriebs mit dem unterhalb der gestrichelten Linie allgemein dargestellten Langstator S, bestehend aus mehreren hintereinander angeordneten Statorabschnitten mit jeweils einer Statorwicklung SA, SB und SC, die ihrerseits jeweils mit einem Wechselrichter WA, WB bzw. WC verbunden sind. Die Wechselrichter werden von einer Energieversorgung EV über einen Zwischenkreis ZK gespeist. Dabei werden die Statorwicklungen der einzelnen Abschnitte von einer nicht dargestellten Steuerung derart angesteuert, daß lediglich die Statorwicklung mit Strom gespeist wird, über der sich die Erregerwicklung EE des Fahrzeugs befindet. Im Erregerteil ist die Erregerwicklung EE an einen Gleichrichter GE angeschlossen, an dessen Ausgang Energie ausgekoppelt werden kann. Diese Energie steht für Kompressoreinheit 8 am Transportfahrzeug 1 zur Verfügung. Zusätzlich steht die in die Erregerwicklung EE induktiv eingekoppelte Energie als Speiseenergie für die Erregerwicklung zur Verfügung.

Um das Fahrzeug eines Linearantriebs anzutreiben, wird in die Erregerwicklung ein Gleichstrom eingespeist. Das Wanderfeld wird durch die Einzelwicklung des Stators, also hier die Statorwicklungen SA, SB und SC, erzeugt.

Die Wechselrichter WA, WB und WC sowie die daran angeschlossene, nicht dargestellte Steuerung bewirken außer der Erzeugung eines Wanderfeldes, daß dem zur Erzeugung des Wanderfeldes dienenden, eine relativ niedrige Frequenz aufweisenden Wechselstrom ein höherfrequenter Wechselstrom überlagert wird. Während der niederfrequente Wechselstrom lediglich zur Bereitstellung der Energie für die Vortriebskraft dient, in der Erregerwicklung jedoch keine Spannung induziert, dient der höherfrequente Wechselstromanteil zum Induzieren einer Spannung in der Erregerwicklung EE, die man als Sekundärwicklung eines Transformator betrachten kann, der aus jeweils einer Statorwicklung, hier der Statorwicklung SB, und der Erregerwicklung EE sowie dem dazwischen befindlichen Luftspalt besteht.

Figur 2 zeigt den Stromverlauf in der Statorwicklung (unterer Verlauf) und in der Erregerwicklung (oberer Verlauf). Man erkennt, daß dem niederfrequenten Wechselstrom, der für den Vortrieb in die einzelnen Statorwicklungen eingespeist wird, ein höherfrequenter Wechselstrom überlagert ist. Dieser höherfrequente Wechselstrom sorgt für die induktive Einkopplung von Energie in die Erregerwicklung. Dort wird ein Wechselstrom induziert, der lediglich durch die Grundwelle des zur Erzeugung des Wanderfeldes bereitgestellten, niederfrequenten Wechselstroms verstimmt ist.

Figur 3 zeigt schematisch einen Teil des Stators S und einen Erregerteil E. Der Erregerteil wird in Figur 3 nach links bewegt, indem im Stator S ein Wanderfeld und im Erregerteil ein statisches Magnetfeld durch Gleichstromeinspeisung erzeugt wird.

Gemäß der Darstellung in Figur 3 stehen sich am Erregerteil ein Pol E1 und am Stator ein Pol S1 gegenüber. In diesem Bereich erfolgt eine optimale Einkopplung des höherfrequenten Anteils seitens des Stators in die Erregerwicklung. Es erfolgt auch eine Kopplung zwischen S1 und E2, diese ist jedoch schwächer, wird aber mit zunehmender annäherung zwischen S1 und E2 stärker. Durch positionsabhängige Phasenumschaltung des höherfrequenten, zur Energieübertragung dienenden Wechselstroms wird erreicht, daß in der Erregerwicklung stets ein gleichphasiger Wechselstrom induziert wird, sich die Anteile aus den einzelnen Bereichen also addieren.

Die in Figur 3 dargestellten Elemente sind bei einem üblichen Synchron-Linearmotor ohnehin vorhanden.

In einer abgewandelten Ausführungsform der Erfindung können zusätzlich zu den bei einem Synchron-Linearmotor ohnenhin vorhandenen Elementen zusätzliche Wicklungen vorgesehen sein, insbesondere Wicklungen am Erregerteil.

Der in Figur 4 schematisch dargestellte Gleichrichter GE dient als sogenannter aktiver Gleichrichter. Außer der Funktion, den höherfrequenten Wechselstrom, der in die Erregerwicklung induziert wird, gleichzurichten, hat der Gleichrichter außerdem noch die Funktion, den in die Erregerwicklung einzuspeisenden Gleichstrom einzustellen. Durch entsprechende Einstellung des Energieflusses läßt sich auch eine umgekehrte Energieübertragung erreichen, also eine Übertragung von Energie von dem Erregerteil E in den Stator S.

Bei einer weiteren Ausführungsform der Erfidnung sind die oben erläuterten und in Figur 4 skizzierten Verhältnisse umgekehrt: Der "Stator" befindet sich am Fahrzeug, während sich an der Strecke Erregerwicklungen befinden. Das Wanderfeld wird dann am Fahrzeug erzeugt.

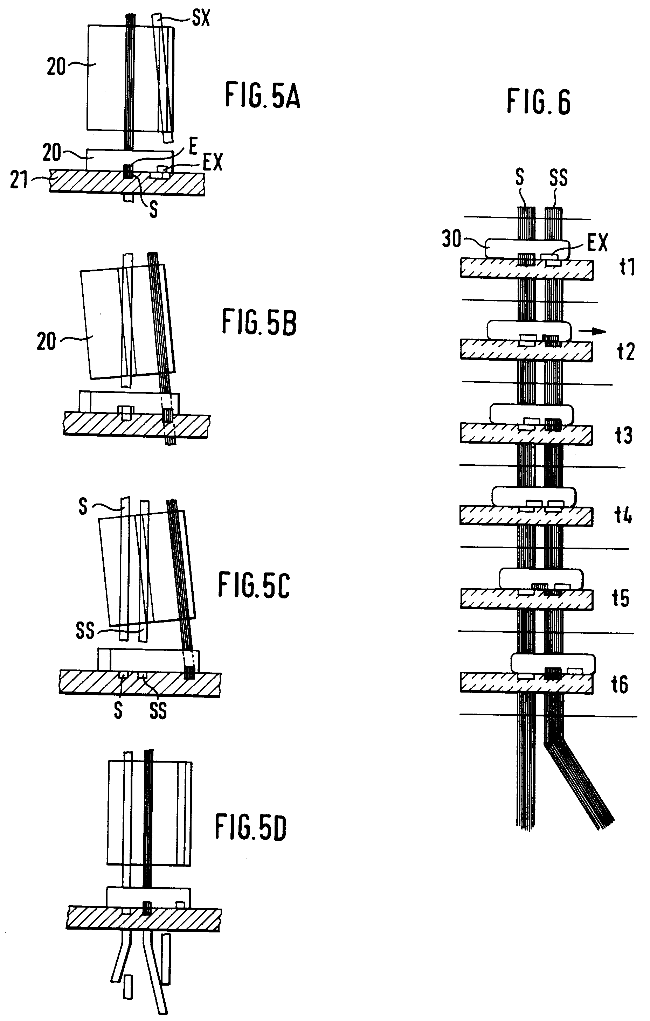

Figur 5 zeigt einzelne Phasen einer Weichenfahrt. In den Figuren 5A bis 5D ist ein Fahrzeug jeweils in Draufsicht und in Querschnitt-Darstellung angedeutet.

Wie in Figur 5A gezeigt ist, fährt ein Fahrzeug 20 mit Synchron-Linearantrieb über eine Fahrstrecke, die durch einen im Boden 21 eingelassenen Langstator S definiert wird. Gemäß Figur 5A sind der Langstator S und die im folgenden als (Haupt-)Erregerteil bezeichnete Erregerwicklung E eingeschaltet. Im Bereich im folgenden näher zu beschreibenden Weiche ist neben dem Langstator S in spitzem Winkel schräg ein Hilfsstator SX angeordnet. Diesem liegt am Fahrzeug ein zusätzliches Erregerteil EX gegenüber.

Gemäß Figur 5B erfolgt eine Umschaltung auf den Hilfs-Langstator SX und das zusätzliche Erregerteil EX, so daß das Fahrzeug 20 eine seitliche Antriebskomponente erhält.

Im Laufe der Weiterfahrt gelangt das Fahrzeug 20 dann in einen Bereich, wo neben dem Langstator S der bisher befahrenen Spur parallel ein Langstator SS einer Abzweigungsspur angeordnet ist. Durch die seitliche Ablenkung des Fahrzeugs befindet sich nach einer gewissen Zeit das (Haupt-)Erregerteil E über dem neuen Langstator SS. Gemäß Figur 5D wird zurückgeschaltet auf das (Haupt-)Erregerteil am Fahrzeug, und es wird umgeschaltet von dem Langstator S auf den Langstator SS. Damit fährt das Fahrzeug gemäß Figur 5D auf der Spur rechts weiter. Ohne die oben beschriebenen Umschaltvorgänge würde das Fahrzeug in Figur 5D nach unten links weiterfahren.

Statt der oben beschriebenen Gabelung kann man auch eine Abzweigung nach links und/oder nach rechts zusätzlich zu einer Geradeausfahrt vorsehen. Im Bereich der Abzweigung kann man dann einen kurzen Überbrückungs-Stator für die Geradeausfahrt anordnen.

Figur 6 zeigt eine alternative Form einer Weiche. Die beiden Langstatoren S und SS verlaufen ein Stück parallel zueinander mit einem gewissen ersten Abstand. Am Fahrzeug 30 ist zusätzlich zu dem (Haupt-)Erregerteil ein zusätzlicher Erregerteil EX vorgesehen. Die beiden Erregerteile haben einen kleineren Abstand als die beiden Langstatoren S und SS.

Wie in Figur 6 durch einzelne Zeitabschnitte angedeutet ist, fährt das Fahrzeug 30 im Bereich der Weiche in Längsrichtung der Langstatoren S und SS, wobei zunächst das (Haupt-)Erregerteil am Fahrzeug 30 und der Langstator S eingeschaltet sind. Für einen Spurwechsel werdren diese beiden Teile dann ausgeschaltet, und es werden der Langstator SS und der zusätzliche Erregerteil EX eingeschaltet. Dies hat zur Folge, daß im Zeitraum t2 das Fahrzeug in Figur 6 nach rechts beschleunigt wird, wobei es zu einem gewissen Zeitpunkt t3 eine Stellung einnimmt, in der der Langstator SS ausgerichtet ist mit dem zusätzlichen Erregerteil EX.

Wenn nun sämtliche Spulen ausgeschaltet werden, bewegt sich das Fahrzeug aufgrund seiner Massenträgheit noch weiter nach rechts, so daß sich das (Haupt-)Erregerteil an den Langstator Ss annähert. Diese beiden Teile werden dann im Zeitraum t5 eingeschaltet. Durch die Anziehung wird nun das Fahrzeug mit seinem (Haupt-)Erregerteil auf der durch den Langstator SS definierten Spur positioniert.

Das oben erläuterte Prinzip läßt sich auch so weiterentwickeln, daß das Fahrzeug nicht nur seitlich versetzt, sondern auch gedreht wird.

## Patentansprüche

1. Spurgeführtes Transportfahrzeug, mit einem elektrischen Synchron-Linearantrieb, einer Luftkissenanordnung (3, 3') zur Lastaufnahme, und einer angetriebenen Kompressoreinheit (8) zur Drucklufterzeugung, wobei der Synchron-Linearantrieb (E, S) mindestens einen an der Fahrstrecke angeordneten Langstator mit Statorwicklungen (SA, SB, SC) zum Erzeugen eines Wanderfeldes für den Antrieb des Fahrzeugs (1) und mindestens einen am Fahrzeug vorhandenen Erregerteil (E) mit gleichstromgespeister Erregerwicklung (EE) aufweist, wobei zur Bordstromversorgung elektrische Energie induktiv über die Statorwicklungen auf das Fahrzeug übertragen wird,
**gekennzeichnet durch**,
Mittel (WA, WB, WC), mit denen dem in die Statorwicklungen eingespeisten, zur Vortriebskrafterzeugung dienenden Wechselstrom ein höherfrequenter Wechselstrom überlagert wird, und eine am Erregerteil (E) vorgesehene Einrichtung zum Auskoppeln der von dem höherfrequenten Wechselstrom in der Erregerwicklung (EE) induzierten Energie zum Speisen der elektrisch angetriebenen Kompressoreinheit (8).

2. Transportfahrzeug nach Anspruch 1,
**dadurch gekennzeichnet**,
daß die Wicklung (EE) am Fahrzeug beweglich gelagert ist, und daß zur Abstandshaltung gegenüber der Wicklung (S) an der Strecke ein Distanzrad (10, 10') oder ein Distanz-Luftkissen (11) vorgesehen ist.

3. Transportfahrzeug nach Anspruch 1,
**dadurch gekennzeichnet**,
daß die Wicklung (EE) am Fahrzeug beweglich gelagert ist, und daß zur Abstandshaltung gegenüber der Wicklung (S) an der Strecke ein postionsregelnder Hydraulikzylinder (12) mit einer Servohydraulik und Weggebern vorgesehen ist.

4. Transportfahrzeug-System mit Fahrzeugen nach einem der Ansprüche 1 bis 3,
**dadurch gekennzeichnet**,
daß entlang den Transportwegen Weichen ausgebildet sind, die eine teilweise Parallelführung von zwei Langstatorabschnitten (S, SS) aufweisen, wobei am Fahrzeug ein Zusatz-Erregerteil (EX) zur Erzeugung von Querkräften vorgesehen ist.

5. Transportfahrzeug-System nach Anspruch 4,
**dadurch gekennzeichnet**,
daß im Weichenbereich ein kurzer, schräg zum Langstator angeordneter Hilfsstator (SX) angeordnet ist.

6. Transportfahrzeug-System nach Anspruch 4,
**dadurch gekennzeichnet**,
daß das Zusatz-Erregerteil von dem Haupt-Erregerteil einen Abstand aufweist, der geringfügig abweicht von dem Abstand der parallel angeordneten Langstatoren (S, SS).

## Claims

1. A track-guided transport vehicle comprising an electric synchronous linear drive, an air cushion arrangement (3, 3') for carrying loads, and a driven compressor unit (8) for producing compressed air, the synchronous linear drive (E, S) having at least one long stator with stator windings (SA, SB, SC) disposed on the route for producing a traveling field for driving the vehicle (1) and at least one exciting component (E) with an exciting winding (EE) supplied with direct current present in the vehicle, electric energy being transmitted to the vehicle inductively via the stator windings for supplying vehicle power,
characterized by
means (WA, WB, WC) for superimposing a higher-frequency alternating current upon the alternating current supplied to the stator windings and serving to produce propulsion force, and means provided on the exciting component (E) for coupling out the energy induced by the higher-frequency alternating current in the exciting winding (EE) for supplying the electrically driven compressor unit (8).

2. The transport vehicle of claim 1,
characterized in that
the winding (EE) is mounted movably on the vehicle, and a distance wheel (10, 10') or distance air cushion (11) is provided for keeping a distance from the winding (S) on the route.

3. The transport vehicle of claim 1,
characterized in that
the winding (EE) is mounted movably on the vehicle, and a positioning hydraulic cylinder (12) with a servo hydraulic unit and displacement pickups is provided for keeping a distance from the winding (S) on the route.

4. A transport vehicle system having vehicles of any of claims 1 to 3,
characterized in that
switches having a partial parallel guidance of two long stator portions (S, SS) are formed along the transport paths, an additional exciting component (EX) being provided on the vehicle for producing transverse forces.

5. The transport vehicle system of claim 4,
characterized in that
a short auxiliary stator (SX) disposed obliquely to the long stator is disposed in the switch area.

6. The transport vehicle system of claim 4,
characterized in that
the additional exciting component is spaced from the main exciting component by a distance deviating slightly from the distance of the parallel long stators (S, SS).

## Revendications

1. Véhicule de transport à trajectoire guidée, comportant un entraînement linéaire électrique synchrone, un dispositif. à coussin d'air (3, 3') destiné à supporter une charge, et un ensemble compresseur (8) entraîné, pour générer de l'air comprimé, l'entraînement linéaire (E, S) présentant au moins un stator long, dispose sur la trajectoire de déplacement, avec des enroulements stators (SA, SB, SC) destinés à générer un champ d'ondes progressives pour l'entraînement du véhicule (1) , et au moins une partie excitatrice (E) existant sur le véhicule avec un enroulement excitateur (EE) alimenté en courant continu, de l'énergie électrique étant transmise de façon inductive par les enroulements de stator au véhicule en vue d'alimenter en courant de bord, caractérisé par des moyens (WA, WB, WC) a' l'aide desquels au courant alternatif injecté dans les enroulements de stator et servant à la génération de la force d'avancement est superposé un courant alternatif à haute fréquence et un dispositif prévu sur la partie excitatrice (E) pour assurer le désacouplement de l'énergie induite dans l'enroulement excitateur (EE) par le courant alternatif à haute fréquence, pour assurer l'alimentation de l'ensemble compresseur (8) à entraînement électrique.

2. Véhicule de transport selon la revendication 1, caractérisé en ce que l'enroulement (EE) est monté mobile sur le véhicule, et en ce que, pour conserver l'espacement par rapport à l'enroulement (S), est prévu sur la voie une roue d'espacement (10, 10') ou bien un coussin d'air d'espacement (11).

3. Véhicule de transport selon la revendication 1, caractérisé en ce que l'enroulement (EE) est monté mobile sur le véhicule et en ce que, pour conserver l'espacement par rapport à l'enroulement (S) sur la voie, est prévu un vérin hydraulique (12) réglant la position, avec une hydraulique d'asservissement et des capteurs de déplacement.

4. Système de véhicule de transport équipé de véhicules selon l'une des revendications 1 à 3, caractérisé en ce que le long des voies de transport sont constitués des aiguillages qui présentent un guidage partiellement parallèle de deux tronçons de stators longs (S, SS), une partie excitatrice additionnelle (EX) étant prévue sur le véhicule pour générer des efforts transversaux.

5. Système de véhicule de transport selon la revendication 4, caractérisé en ce que, dans la zone d'aiguillage, est disposé un stator auxiliaire (SX) court, disposé obliquement par rapport au stator long.

6. Système de véhicule de transport selon la revendication 4, caractérisé en ce que la partie excitatrice additionnelle présente vis-à-vis de la partie excitatrice principale un espacement légèrement différent de l'espacement entre les stators longs (S, SS) disposés parallèlement.
